Europäisches Patentamt

European Patent Office

Office européen des brevets

(11) Veröffentlichungsnummer: **0 417 499 A1**

# (12) EUROPÄISCHE PATENTANMELDUNG

(21) Anmeldenummer: 90115646.3

(22) Anmeldetag: 16.08.90

(51) Int. Cl.⁵: **H02B 1/38**

(30) Priorität: 09.09.89 DE 3930188

(43) Veröffentlichungstag der Anmeldung:
**20.03.91 Patentblatt 91/12**

(84) Benannte Vertragsstaaten:
**AT BE CH DE DK ES FR GB GR IT LI LU NL SE**

(71) Anmelder: **Rittal-Werk Rudolf Loh GmbH & Co. KG**
**Auf dem Stützelberg**
**W-6348 Herborn(DE)**

(72) Erfinder: **Münch, Udo**
**Wetzlarer Strasse 23**
**W-6349 Sinn(DE)**
Erfinder: **Zachrai, Jürgen**
**Am Hungersberg 2**
**W-6340 Dillenburg-Nanzenbach(DE)**

(74) Vertreter: **Vogel, Georg**
**Pat.-Ing. Georg Vogel**
**Hermann-Essig-Strasse 35**
**W-7141 Schwieberdingen(DE)**

(54) Schaltschrank mit einer Schranktür.

(57) Die Erfindung betrifft einen Schaltschrank mit einer Schranktür, in die eine Ausnehmung eingebracht ist, welche mittels eines Rahmens abgedeckt ist. Um im Bereich der Ausnehmung der Schranktür mehr Platz für zusätzliche Einbauten zu schaffen, sieht die Erfindung vor, daß der Rahmen mit einem wannenförmigen Einsatz verbunden ist, der in den Durchbruch der Schranktür eingesetzt ist, daß der Rahmen einen Verbindungsabschnitt aufweist, der auf der Außenseite der Schranktür den an den Durchbruch anschließenden Randbereich überdeckt und auf der Rahmenaußenseite in einen zur Schranktür hin offenen U-förmigen Abschlußrahmen übergeht, daß im Bereich der unteren horizontalen Kante des Einsatzes eine Klappe verschwenkbar gelagert ist, die mittels Klappenhalter oder Klappenbremsen in eine horizontale Öffnungsstellung bringbar und darin fest gehalten ist und daß die Klappe mittels eines Verschlußelementes in der die offene Seite des Einsatzes abdeckenden Schließstellung arretierbar ist.

EP 0 417 499 A1

## SCHALTSCHRANK MIT EINER SCHRANKTÜR

Die Erfindung betrifft einen Schaltschrank mit einer Schranktür, in die eine Ausnehmung eingebracht ist, welche mittels eines Rahmens abgedeckt ist.

Wie die DE-PS 28 47 994 zeigt, bildet der Rahmen um die Ausnehmung der Schranktür eine Halterung für eine Fensterscheibe. Außerdem läßt sich der Rahmen mit einer Trägerplatte verbinden, auf der Bedienungselemente befestigt sein können. Der Platzbedarf für den Einbau von Bedienungselementen ist jedoch sehr klein, da der Rahmen möglichst nicht zu sehr an der Schranktür abstehen soll.

Es ist Aufgabe der Erfindung, einen Schaltschrank der eingangs erwähnten Art so zu gestalten, daß im Bereich der Ausnehmung der Schranktür ein wesentlich größerer Platz für die Unterbringung von zusätzlichen Teilen erhalten wird, ohne über die Außenseite der Schranktür hinaus unverhältnismäßig hoch ausbauen zu müssen.

Diese Aufgabe wird nach der Erfindung dadurch gelöst, daß der Rahmen mit einem wannenförmi gen Einsatz verbunden ist, der in den Durchbruch der Schranktür eingesetzt ist, daß der Rahmen einen Verbindungsabschnitt aufweist, der auf der Außenseite der Schranktür den an den Durchbruch anschließenden Randbereich überdeckt und auf der Rahmenaußenseite in einen zur Schranktür hin offenen U- förmigen Abschlußrahmen übergeht, daß im Bereich der unteren horizontalen Kante des Einsatzes ei ne Klappe verschwenkbar gelagert ist, die mittels Klappenhalter oder Klappenbremsen in eine horizontale Öffnungsstellung bringbar und darin fest gehalten ist und daß die Klappe mittels eines Verschlußelementes in der die offene Seite des Einsatzes abdeckenden Schließstellung arretierbar ist.

Der Einsatz mit der verschließbaren Klappe ergibt praktisch einen in die Ausnehmung der Schranktür eingebauten kleinen Schrank, der wesentlich mehr Teile aufnehmen kann und selbst als Trägerplatte für den Einbau von Bedienungselementen ausgenützt werden kann, wobei die Klappe in der Öffnungsstellung nicht nur den Zugang zu den Einbauten freigibt, sondern selbst auch noch als Träger für abzustellende Gegenstände benutzt werden kann.

Der Aufbau wird nach einer Ausgestaltung dadurch vereinfacht, daß der Rahmen einstückig an dem Einsatz angeformt, vorzugsweise abgekantet ist.

Für den Einbau in die Ausnehmung der Schranktür ist einfach vorgesehen, daß der Verbindungsabschnitt mit der Schranktür fest verbunden, z.B. verschraubt, ist.

Ist weiterhin vorgesehen, daß der Verbindungsabschnitt des Rahmens auf der Außenseite ein Dichtungselement trägt und daß der Abschlußrahmen in seiner offenen Seite ein weiteres Dichtungselement aufnimmt, dann ist der Einsatz in der Schließstellung der Klappe dicht verschlossen und der Rahmen schließt zur Schranktür hin ebenfalls dicht ab.

Wird die ausgeklappte Klappe als Arbeitsplatte, z.B. zum Abstellen einer Tastatur, verwendet, dann ist eine Ausgestaltung von Vorteil, die dadurch gekennzeichnet ist, daß die obere Seitenwand des Einsatzes so geneigt ist, daß sich der Innenraum zur offenen Seite hin vergrößert und daß in die obere Seitenwand eine Beleuchtungsanordnung zur Ausleuchtung des Raumes über der ausgeklappten Klappe eingebaut ist.

Die Sicherung der auf der ausgeklappten Klappe abgestellten Gegenstände läßt sich einfach dadurch erreichen, daß die Klappe auf der Innenseite eine umlaufende Abkantung als Halterung für auf der Klappe abgestellte Gegenstände, wie eine Tastatur, trägt.

Für die Handhabung der Klappe ist nach einer weiteren Ausgestaltung vorgesehen, daß die Klappe auf der Außenseite auf der der Anlenkseite gegenüberliegenden Kante eine vorzugsweise abgekantete Griffleiste trägt.

Ein optisch ansprechender Abschluß der Ausnehmung in der Schranktür läßt sich dadurch erreichen, daß der Abschlußrahmen einen senkrecht zur Schranktür stehenden Abschnitt aufweist, der in einen parallel zur Schranktür verlaufenden Abschnitt übergeht, und daß der Abschlußrahmen zur Außenseite hin mit einem zur Schranktür gerichteten, geneigten Abschnitt abgeschlossen ist, der die Breite des Abschlußrahmens zur Schranktür hin zunehmen läßt, sowie dadurch, daß die Klappe mit den an die Anlenkseite anschließenden Seiten drehbar im Abschlußrahmen gelagert ist und in der Schließstellung bündig mit dem parallel zur Schranktür verlaufenden Abschnitt des Abschlußrahmens abschließt.

Die Erfindung wird anhand von verschiedenen, in den Zeichnungen dargestellten Ausführungsbeispielen näher erläutert. Es zeigt jeweils in perspektivischer Ansicht:

Fig. 1 einen mit einer Klappe verschließbaren wannenförmigen Einsatz, der in eine entsprechende Ausnehmung einer Schranktür eines Schaltschrankes eingebaut ist,

Fig. 2 einen Einsatz mit Klappe, die im Gegensatz zu Fig. 1 nicht mit Klappenhaltern sondern mit Klappenbremsen gehalten ist,

Fig. 3 einen vergrößerten Ausschnitt, der die Ausgestaltung des am Einsatz angeformten Rahmens und die Abdichtung erkennen läßt,

Fig. 4 den Einsatz nach Fig. 2 bei einer mit einer Tastatur belasteten Klappe,

Fig. 5 eine Teilansicht mit anders ausgebildetem und beleuchtbarem Einsatz und

Fig. 6 einen Einsatz, der als Träger für Bedienungselemente usw. verwendet und mittels der Klappe verschließbar ist.

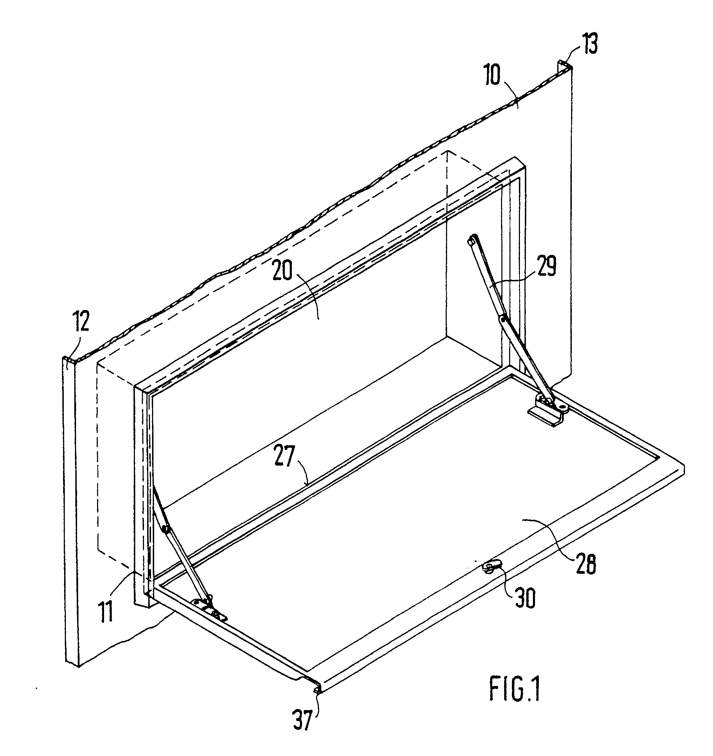

In Fig. 1 ist von der Schranktür 10 nur ein Teil zu sehen, in den ein rechteckförmiger Durchbruch 11 eingebracht ist. Die vertikalen Kanten der Schranktür 10 sind durch die Abkantungen 12 und 13 versteift. In die Ausnehmung 11 der Schranktür 10 ist der wannenförmige Einsatz 20 eingesetzt, der im Bereich der offenen Seite in einen nicht näher bezeichneten, umlaufenden Rahmen übergeht. Im Bereich der Anlenkseite 27 ist die Klappe 28 schwenkbar mit dem Einsatz 20 verbunden. Die Klappe 28 ist zu beiden Seiten mit jeweils einem aus zwei gelenkig miteinander verbundenen Hebeln bestehenden Klappenhalter 29 in der horizontalen Öffnungsstellung gehalten und kann als zusätzliche Arbeitsplatte oder Abstellplatte benützt werden. Die der Anlenkseite 27 gegenüberliegende Kante der Klappe 28 ist zur Außenseite hin als Griffleiste 27 abgekantet und mit dem Verschlußelement 30 versehen, das die Klappe 28 in der Schließstellung arretiert, in der sie die offene Seite des Einsatzes 20 mit dem Rahmen bündig verschließt. Die Rahmenhöhe ist bewußt klein gehalten, damit der Einbau nicht übermäßig aufträgt.

Die Tiefe des Einsatzes 20 richtet sich nach dem Platzbedarf für die einzubauenden oder einzustellenden Gegenstände und nach den Einbauten im Schaltschrank, die zur Rückseite des Einsatzes bei geschlossener Schranktür den erforderlichen Abstand einhalten müssen.

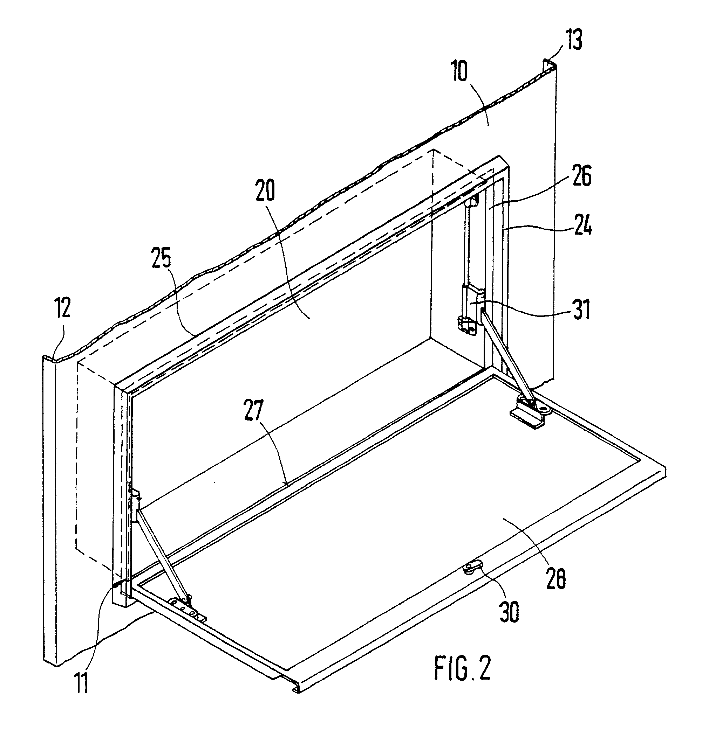

Bei dem Ausführungsbeispiel nach Fig. 2 sind anstelle der beiden Klappenhalter 29 zwei Klappenbremsen 31 zum Festhalten der Klappe 28 vorgesehen. Dabei werden bevorzugt in der Bremskraft einstellbare Klappenbremsen 31 verwendet, so daß die Absenkbewegung der Klappe 28 mit darauf befestigten Gegenständen eingestellt werden kann.

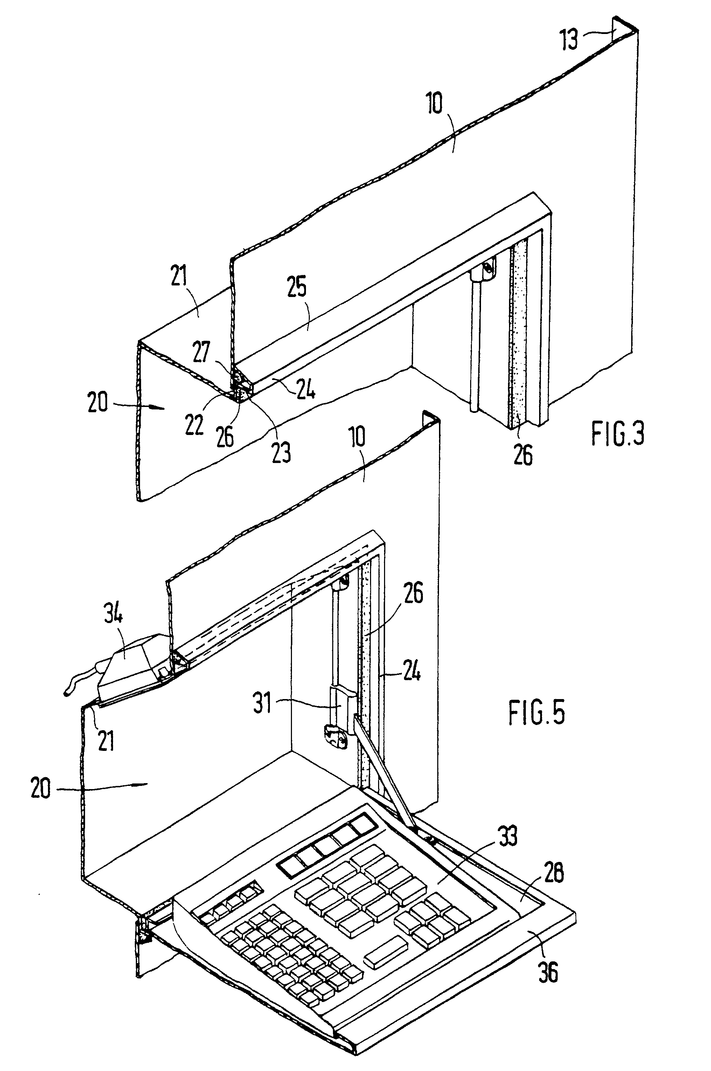

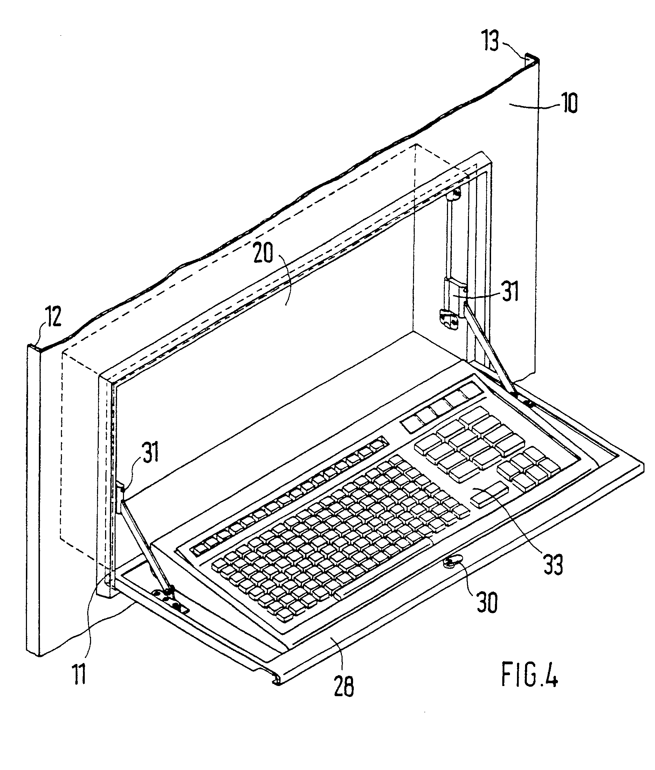

Die vergrößerte Teilansicht nach Fig. 3 läßt die Ausgestaltung des am Einsatz abgekanteten Rahmens erkennen. Zunächst wird an der offenen Seite des Einsatzes 20 der nach außen gerichtete Verbindungsabschnitt 22 angebracht, der am Ende in den nach vorne gerichteten und zur Schranktür 10 hin offenen Abschlußrahmen aus den Abschnitten 23, 24 und 25 übergeht. Der Verbindungsabschnitt 22 und der Abschnitt 24 verlaufen parallel zur Schranktür 10, während der Abschnitt 23 senkrecht dazu steht. Der Abschnitt 25 ist so geneigt, daß er zur Schranktür 10 hin die Breite des U-förmigen Abschlußrahmens vergrößert. Auf der Außenseite des Verbindungsabschnittes 22 ist das Dichtungselement 26 aufgebracht, das in der Schließstellung der Klappe 28 die Abdichtung zwischen der Klappe 28 und dem Einsatz 20 übernimmt. Der Verbindungsabschnitt 22 ist fest mit dem Randbereich um die Ausnehmung 11 der Schranktür 10 verbunden, z. B. verschraubt und zwar schon vor dem Aufbringen des Dichtungselementes 26. Der offene Abschlußrahmen mit den Abschnitten 23, 24 und 25 nimmt das weitere Dichtungselement 27 auf, das die Abdichtung zwischen dem Abschlußrahmen und der Schranktür 10 übernimmt.

Fig. 4 zeigt, wie auf der Innenseite der Klappe 28 eine abgekantete Aufnahme entstehen kann, in der z.B. eine Tastatur 33 gehalten wird. Ist die Tastatur 33 mit der Klappe 28 noch zusätzlich verbunden, dann kann sie mit der Klappe 28 in die Schließstellung gebracht werden, in der sie vom Einsatz 20 aufgenommen wird. Die Anschlußkabel der Tastatur 33 können über an sich bekannte Kabeldurchführungen aus dem Einsatz 20 in den Schaltschrank geführt werden.

Wie Fig. 5 zeigt, kann die obere Seitenwand 21 des Einsatzes 20 auch so geneigt werden, daß sich der Innenraum des Einsatzes 20 zur offenen Seite hin vergrößert, dann kann die Beleuchtungsanordnung 34 so in die Seitenwand 21 eingebaut werden, daß die auf der ausgeklappten Klappe 28 in der durch die Abkantungen 36 gebildeten Aufnahme stehende Tastatur 33 beleuchtet wird.

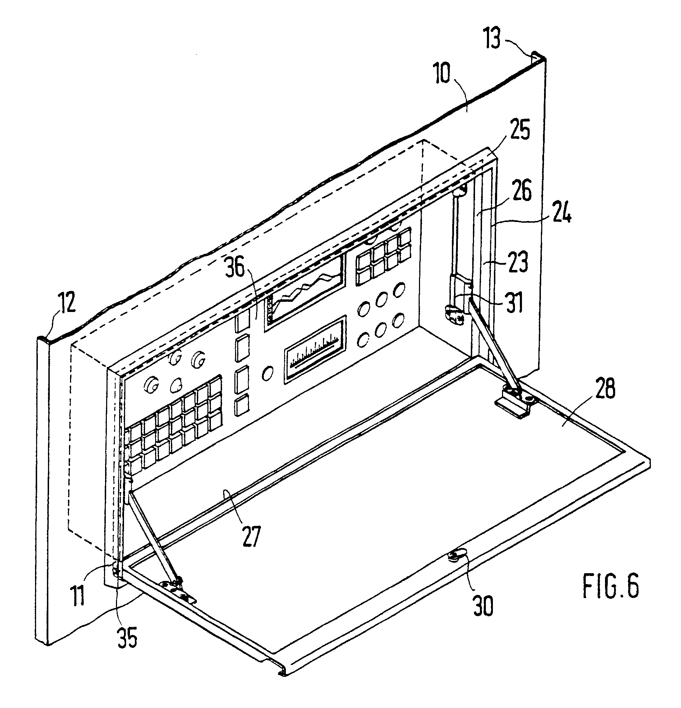

Schließlich zeigt die Fig. 6 ein Ausführungsbeispiel, bei dem der Boden des Einsatzes 20 als Trägerplatte für Bedienungselemente usw. verwendet wird. Dabei kann die Tiefe des Einsatzes 20 auch kleiner gehalten werden. Außerdem läßt die Fig. 6 erkennen, daß die Klappe 28 mit den an die Anlenkseite 27 anschließenden Seiten in den Abschlußrahmen-Abschnitten 23 drehbar gelagert ist, so daß sie in der Schließstellung bündig mit den Abschlußrahmen-Abschnitten 24 bündig abschließt. Das Verschlußelement 30 kann ein einfacher Vorreiber-Verschluß sein, der mittels eines Betätigungselementes verdreht werden kann und in eine Ausnehmung in dem Rahmen eingebracht wird.

## Ansprüche

1. Schaltschrank mit einer Schranktür, in die eine Ausnehmung eingebracht ist, welche mittels eines Rahmens abgedeckt ist,
dadurch gekennzeichnet,
daß der Rahmen mit einem wannenförmigen Einsatz (20) verbunden ist, der in den Durchbruch (11) der Schranktür (10) eingesetzt ist,
daß der Rahmen einen Verbindungsabschnitt (22) aufweist, der auf der Außenseite der Schranktür (10) den an den Durchbruch (11) anschließenden Randbereich überdeckt und auf der Rahmenaußenseite in einen zur Schranktür (10) hin offenen U-förmigen Abschlußrahmen (23,24,25) übergeht,

daß im Bereich der unteren horizontalen Kante (27) des Einsatzes (20) eine Klappe (28) verschwenkbar gelagert (35) ist, die mittels Klappenhalter (29) oder Klappenbremsen (31) in eine horizontale Öffnungsstel lung bringbar und darin fest gehalten ist und

daß die Klappe (28) mittels eines Verschlußelementes (30) in der die offene Seite des Einsatzes (20) abdeckenden Schließstellung arretierbar ist.

2. Schaltschrank nach Anspruch 1,
dadurch gekennzeichnet,
daß der Rahmen einstückig an dem Einsatz (20) angeformt, vorzugsweise abgekantet ist.

3. Schaltschrank nach Anspruch 1 oder 2,
dadurch gekennzeichnet,
daß der Verbindungsabschnitt (22) mit der Schranktür (10) fest verbunden, z.B. verschraubt, ist.

4. Schaltschrank nach einem der Ansprüche 1 bis 3,
dadurch gekennzeichnet,
daß der Verbindungsabschnitt (22) des Rahmens auf der Außenseite ein Dichtungselement (26) trägt und daß der Abschlußrahmen (23,24,25) in seiner offenen Seite ein weiteres Dichtungselement (27) aufnimmt.

5. Schaltschrank nach einem der Ansprüche 1 bis 4,
dadurch gekennzeichnet,
daß die obere Seitenwand (21) des Einsatzes (20) so geneigt ist, daß sich der Innenraum zur offenen Seite hin vergrößert und

daß in die obere Seitenwand (21) eine Beleuchtungsanordnung (34) zur Ausleuchtung des Raumes über der ausgeklappten Klappe (28) eingebaut ist.

6. Schaltschrank nach einem der Ansprüche 1 bis 5,
dadurch gekennzeichnet,
daß die Klappe (28) auf der Innenseite eine umlaufende Abkantung (36) als Halterung für auf der Klappe (28) abgestellte Gegenstände, wie eine Tastatur (33), trägt.

7. Schaltschrank nach einem der Ansprüche 1 bis 6,
dadurch gekennzeichnet,
daß die Klappe (28) auf der Außenseite auf der der Anlenkseite (27) gegenüberliegenden Kante eine vorzugsweise abgekantete Griffleiste (37) trägt.

8. Schaltschrank nach einem der Ansprüche 1 bis 7,
dadurch gekennzeichnet,
daß der Abschlußrahmen einen senkrecht zur Schranktür (10) stehenden Abschnitt (23) aufweist, der in einen parallel zur Schranktür (10) verlaufenden Abschnitt (25) übergeht, und

daß der Abschlußrahmen zur Außenseite hin mit einem zur Schranktür (10) gerichteten, geneigten Abschnitt (25) abgeschlossen ist, der die Breite des Abschlußrahmens zur Schranktür (10) hin zunehmen läßt.

9. Schaltschrank nach einem der Ansprüche 1 bis 8,
dadurch gekennzeichnet,
daß die Klappe (28) mit den an die Anlenkseite (27) anschließenden Seiten drehbar im Abschlußrahmen gelagert ist und in der Schließstellung bündig mit dem parallel zur Schranktür (10) verlaufenden Abschnitt (24) des Abschlußrahmens abschließt.

FIG.1

FIG.2

FIG.3

FIG.5

FIG.4

FIG.6

Europäisches
Patentamt

**EUROPÄISCHER
RECHERCHENBERICHT**

Nummer der Anmeldung

**EP 90 11 5646**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | IBM TECHNICAL DISCLOSURE BULLETIN. vol. 3, no. 3, August 1960, NEW YORK US Seiten 21 - 22; Pittwood: "Control panel closure mechanism" * das ganze Dokument * | 1 | H 02 B 1/38 |
| A | DE-B-1 182 322  (CHRISTIAN GEYER) * Spalte 3, Zeile 62 - Spalte 4, Zeile 61; Figuren 2, 5 * | 1 | |

RECHERCHIERTE
SACHGEBIETE (Int. Cl.5)

H 02 B
H 05 K

Der vorliegende Recherchenbericht wurde für alle Patentansprüche erstellt

| Recherchenort | Abschlußdatum der Recherche | Prüfer |
|---|---|---|
| Den Haag | 11 Dezember 90 | WOODALL C.G. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
    nach dem Anmeldedatum veröffentlicht worden ist
D : in der Anmeldung angeführtes Dokument
L : aus anderen Gründen angeführtes Dokument
------------------------------------------------------------
& : Mitglied der gleichen Patentfamilie,
    übereinstimmendes Dokument